# EUROPEAN PATENT APPLICATION

(11) **EP 4 575 776 A1**
(43) Date of publication of application: **25.06.2025**
(21) Application number: 24720404.3
(22) Date of filing: 11.04.2024
(51) Int. Cl.: G06F 9/451, G06F 11/362

(54) **METHOD AND APPARATUS FOR DEBUGGING DIGITAL ASSISTANT, DEVICE, AND STORAGE MEDIUM**

(30) Priority: 27.10.2023 CN 202311416399
(71) Applicant: Beijing Zitiao Network Technology Co., Ltd., Beijing 100190 (CN)
(72) Inventor: JIA, Xuewei, Chaoyang District Bejing 10028 (CN)
(74) Representative: Dentons UK and Middle East LLP
(86) International application number: PCT/CN2024/087343
(87) International publication number: WO 2025/086563

(57) **Abstract**

Embodiments of the disclosure provide a method, apparatus, device, and storage medium for debugging a digital assistant. The method includes: receiving a debugging request of a user based on natural language; displaying, on a user interface, at least one of a determination process of one or more function blocks of the digital assistant related to the debugging request, a call process of the one or more function blocks, or a call result of the one or more function blocks; and displaying, on the user interface, a debugging result for the debugging request. Therefore, by providing a modular and simple input digital assistant debugging solution, users may easily and quickly debug digital assistants with different capabilities without requiring coding skills.

## Description

The present application claims priority to Chinese Patent Application No. 202311416399.7, filed on October 27, 2023, and entitled "Method, apparatus, device and storage medium for debugging a digital assistant", the entirety of which is incorporated here by reference.

### TECHNICAL FIELD

Example embodiments of the present disclosure generally relate to the field of computers, and more particularly to a method, apparatus, device and computer readable storage medium for debugging a digital assistant.

### BACKGROUND

Digital assistants are provided to assist users in various task processing needs in different applications and scenarios. Digital assistants usually have intelligent conversation and task processing capabilities. During the interaction with a digital assistant, a user inputs an interactive message, and the digital assistant provides a response message in response to the user input. Typically, digital assistants can enable users to input questions in a natural language and to perform tasks and provide replies based on the understanding of the natural language input and logical reasoning capabilities of the digital assistants. Such interaction patterns have become tools that people love and rely on because of their flexibility and convenience.

### SUMMARY

In a first aspect of the present disclosure, a method of debugging a digital assistant is provided. The method includes: receiving a debugging request of a user based on natural language; displaying, on a user interface, at least one of a determination process of one or more function blocks of the digital assistant related to the debugging request, a call process of the one or more function blocks, or a call result of the one or more function blocks; and displaying, on the user interface, a debugging result for the debugging request.

In a second aspect of the present disclosure, an apparatus for debugging a digital assistant is provided. The apparatus includes: a request receiving module configured to receive a debugging request of a user based on natural language; a process displaying module configured to display, on a user interface, at least one of a determination process of one or more function blocks of the digital assistant related to the debugging request, a call process of the one or more function blocks, or a call result of the one or more function blocks; and a result displaying module configured to display, on the user interface, a debugging result for the debugging request.

In a third aspect of the present disclosure, an electronic device is provided. The device includes at least one processing unit; and at least one memory, at least one memory is coupled to the at least one processing unit and stores instructions for execution by the at least one processing unit. The instructions cause the electronic device to perform the method of the first aspect when executed by the at least one processing unit.

In a fourth aspect of the present disclosure, a computer-readable storage medium is provided. The medium stores a computer program that implements the method of the first aspect when executed by a processor.

It should be understood that the contents described in this section are not intended to limit the key features or important features of the present disclosure, nor are they intended to limit the scope of the present disclosure. Other features of the present disclosure will become readily understood from the following description.

### BRIEF DESCRIPTION OF THE DRAWINGS

In the following text, the above and other features, advantages, and aspects of each embodiment of the present disclosure will become more apparent in conjunction with the accompanying drawings and with reference to the following detailed description. In the drawings, the same or similar reference numerals indicate the same or similar elements, where:
FIG. 1 illustrates a schematic diagram of an example environment in which embodiments of the present disclosure may be implemented;
FIG. 2 illustrates a schematic diagram of an example of a page for creating a digital assistant In accordance with some embodiments of the present disclosure;
FIG. 3 illustrates a schematic diagram of an example of a user interface for debugging a digital assistant in accordance with some embodiments of the present disclosure;
FIG. 4A and FIG. 4B illustrate schematic diagrams of examples of user interfaces showing a determination process and a call result in accordance with some embodiments of the present disclosure;
FIG. 5A and FIG. 5B illustrate schematic diagrams of examples of user interfaces showing a call process according to some embodiments of the present disclosure;
FIG. 6 illustrates a schematic diagram of an example of a user interface presenting stored data in accordance with some embodiments of the present disclosure;
FIG. 7 illustrates a schematic diagram of an example of a user interface presenting a set task in accordance with some embodiments of the present disclosure;
FIG. 8 illustrates a flowchart of a process for debugging a digital assistant In accordance with some embodiments of the present disclosure;
FIG. 9 illustrates a schematic structural block diagram of an apparatus for debugging a digital assistant in accordance with some embodiments of the present disclosure; and
FIG. 10 illustrates a block diagram of an electronic device capable of implementing a plurality of embodiments of the present disclosure.

### DETAILED DESCRIPTION

Embodiments of the present disclosure will be described in more detail below with reference to the accompanying drawings. Although some embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the drawings and embodiments of the present disclosure are only for illustrative purposes and are not intended to limit the scope of protection of the present disclosure.

In the description of the embodiments of the present disclosure, the term "including" and similar terms should be understood as open-ended inclusion, that is, "including but not limited to". The term "based on" should be understood as "at least partially based on". The terms "one embodiment" or "the embodiment" should be understood as "at least one embodiment". The term "some embodiments" should be understood as "at least some embodiments". Other explicit and implicit definitions may also be included below.

Unless expressly stated, performing a step "in response to A" does not mean that the step is performed immediately after "A", but may include one or more intermediate steps.

It is to be understood that data involved in the present technical solution (including but not limited to the data itself, the acquisition, use, storage or deletion of the data) should comply with requirements of corresponding laws and regulations and relevant rules.

It is to be understood that, before applying the technical solutions disclosed in various embodiments of the present disclosure, the relevant user should be informed of the type, scope of use, and use scenario of the personal information involved in the subject matter described herein in an appropriate manner in accordance with relevant laws and regulations, and user authorization should be obtained, wherein the relevant user may include any type of rights subject, such as individuals, enterprises, groups.

For example, in response to receiving an active request from the user, prompt information is sent to the user to explicitly inform the user that the requested operation would acquire and use the user's personal information. Therefore, according to the prompt information, the user may decide on his/her own whether to provide the personal information to the software or hardware, such as electronic devices, applications, servers, or storage media that execute operations of the technical solutions of the subject matter described herein.

As an optional, but non-limiting, embodiment, in response to receiving an active request from the user, the way of sending the prompt information to the user may, for example, include a pop-up window, and the prompt information may be presented in the form of text in the pop-up window. In addition, the pop-up window may also carry a select control for the user to choose to "agree" or "disagree" to provide the personal information to the electronic device.

It is to be understood that the above process of notifying and obtaining the user authorization is only illustrative and does not limit the embodiments of the present disclosure. Other methods that satisfy relevant laws and regulations are also applicable to the embodiments of the present disclosure.

As used in this specification, the term "model" may learn the correlation relationship between corresponding inputs and outputs from training data, so that corresponding outputs may be generated for given inputs after training. The generation of the model may be based on machine learning technology. Deep learning is a machine learning algorithm that processes inputs and provides corresponding outputs by using a plurality of layers of processing units. Neural networks models are an example of deep learning-based models. Herein, "model" may also be referred to as "machine learning model", "learning model", "machine learning network", or "learning network", and these terms are used interchangeably herein.

Digital assistants may serve as effective tools for people's work, study, and life. Typically, the development of digital assistants is similar to the development of general applications, requiring developers with programming skills to define the various capabilities of digital assistants by writing complex code and deploying them on appropriate operating platforms so that users may download, install, and use digital assistants.

With the diversification of application scenarios and the increasing availability of machine learning technology, it is expected to develop more digital assistants with different capabilities to support task processing in various subdivisions or meet the personalized needs of different users. However, limited by programming capabilities and limited understanding of the underlying implementation logic of digital assistants, users cannot freely and conveniently create different digital assistants. It is expected to provide a more convenient and flexible way to debug the digital assistants, allowing users to debug the digital assistant through simple operations.

According to embodiments of the present disclosure, an improved scheme for debugging a digital assistant is provided. According to this solution, a user interface for debugging a digital assistant is provided. In this user interface, a debugging request input in natural language is received. At least one of a determination process of one or more function blocks of the digital assistant related to the debugging request, a call process of the one or more function blocks, or a call result of the one or more function blocks is displayed on the user interface. A debugging result for the debugging request is displayed on the user interface. In this way, for users who need to debug the digital assistant (such as developers of the digital assistant), debugging requests may be quickly input into the user interface to complete the debugging process of the digital assistant.

Therefore, by providing a modular and simple input digital assistant debugging solution, users may easily and quickly debug digital assistants with different capabilities without requiring coding skills.

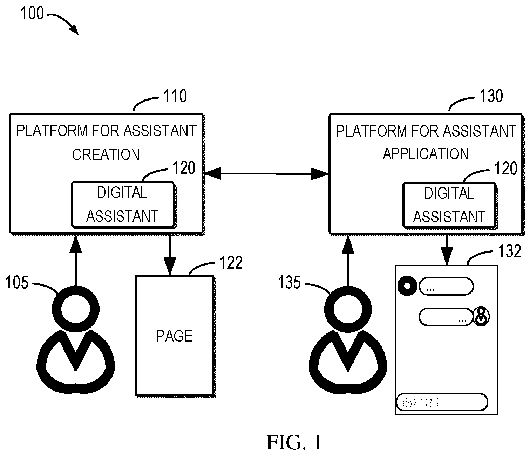

FIG. 1 illustrates a block diagram of an example environment 100 in which embodiments of the present disclosure may be implemented. The environment 100 involves an assistant creation platform 110 and an assistant application platform 130.

As shown in FIG. 1, the assistant creation platform 110 may provide creation, debugging and publishing environments of the digital assistant for a user 105. In some embodiments, the assistant creation platform 110 may be a low-code platform that provides a collection of tools for digital assistant creation and debugging. The assistant creation platform 110 may support visual development of digital assistants, allowing developers to skip the manual coding process, accelerating the development cycle of applications and reducing the cost. The assistant creation platform 110 may support any suitable platform for users to develop digital assistants and other types of applications, such as platforms based on application platform as a service (aPaaS). Such a platform may enable users to efficiently develop applications and achieve application creation, application functionality adjustment, and other operations.

The assistant creation platform 110 may be deployed locally on a terminal device of the user 105 and/or may be supported by a remote server. For example, the terminal device of the user 105 may run a client with the assistant creation platform 110, which may support the user's interaction with the assistant creation platform 110. In the case where the assistant creation platform 110 runs locally on the user's terminal device, the user 105 may directly use the client to interact with the local assistant creation platform 110. In the case where the assistant creation platform 110 runs on a server device, the server device may provide services to the client running on the terminal device based on the communication connection with the terminal device. The assistant creation platform 110 may present a corresponding page 122 to the user 105 based on the operation of the user 105 to output and/or receive information to and/or from the user 105.

In some embodiments, the assistant creation platform 110 may be associated with a corresponding database that stores data or information required for the digital assistant creation process supported by the assistant creation platform 110. For example, the database may store code and descriptive information corresponding to various functional modules that constitute the digital assistant. The assistant creation platform 110 may also perform operations such as calling, adding, deleting, updating, etc. on the functional modules in the database. The database may also store operations that may be performed on different functional modules. In an example, in a scenario where an application is to be created, the assistant creation platform 110 may call corresponding functional blocks from the database to build the application.

In some embodiments of the present disclosure, the user 105 may create and debug the digital assistant 120 on the assistant creation platform 110 as needed. The user 105 may also publish the digital assistant 120 on the assistant creation platform 110. The digital assistant 120 may be published to any suitable assistant application platform 130 as long as the assistant application platform 130 may support the running of the digital assistant 120. After publication, the digital assistant 120 may be used for conversational interaction with the user 135. The client of the assistant creation platform 110 may present an interaction window 132 of the digital assistant 120 in the client interface, such as a conversation window. The digital assistant 120, as an intelligent assistant, has intelligent conversation and information processing capabilities.

The user 105 may input a conversation message in the conversation window. The digital assistant 120 may determine a response message based on the created configuration information and present it to the user in the interaction window 132. The assistant creation platform 110 may obtain interaction information between the user 105 and the digital assistant 120 in the conversation window (including conversation messages from the user 105 and reply messages from the digital assistant 120). In some embodiments, depending on the configuration of the digital assistant 120, the interaction message with the digital assistant 120 may include messages in multi-modal forms, such as text messages (e.g., natural language text), voice messages, image messages, video messages, and so on.

In some embodiments, the assistant creation platform 110 may use the model to understand the user's conversation messages and determine the next steps to be performed. The assistant creation platform 110 may interact with the model to provide a model input to the model and obtain a corresponding model output from the model. Such a model may run locally on the assistant creation platform 110 or on a remote server. In some embodiments, the model may be a machine learning model, a deep learning model, a learning model, neural networks, etc. In some embodiments, the model may be based on a language model (LM). The language model may have question-answer capabilities by learning from a large corpus of data. Certainly, the model may also be based on other appropriate models.

The assistant creation platform 110 and/or the assistant application platform 130 may run on an appropriate electronic device. The electronic device here may be any type of computing-capable device, including a terminal device or a server device. The terminal device may be any type of mobile terminal, stationary terminal, or portable terminal, including mobile phones, desktop computers, laptop computers, notebook computers, netbook computers, tablet computers, media computers, multimedia tablets, personal communication system (PCS) devices, personal navigation devices, personal digital assistants (PDAs), audio/video player, digital cameras/camcorders, positioning devices, television receivers, radio broadcast receivers, electronic book devices, gaming devices, or any combination of the foregoing, including accessories and peripherals of these devices, or any combination thereof. Server devices may include, for example, computing systems/servers, such as mainframes, edge computing nodes, computing devices in cloud environments, and the like. In some embodiments, the assistant creation platform 110 and/or the assistant application platform 130 may be implemented based on cloud services.

It should be understood that the structure and functionality of environment 100 are described for illustrative purposes only, without implying any limitation on the scope of the present disclosure.

Some example embodiments of the present disclosure will be described in detail below with reference to the accompanying drawings. It should be understood that the pages shown in the drawings are merely examples and various page designs may actually exist. The various graphic elements in the page may have different arrangements and visual representations, one or more of which may be omitted or replaced, and one or more other elements may also exist. Embodiments of the present disclosure are not limited in this aspect.

The digital assistant creation process described in this specification may be implemented on the assistant creation platform, a terminal device which installs the assistant creation platform, and/or a server corresponding to the assistant creation platform. In some examples below, for the sake of discussion, description is made from the perspective of the assistant creation platform, such as the assistant creation platform 110 shown in FIG. 1. The pages presented by the assistant creation platform 110 may be presented via the terminal device of the user 105, and user input may be received via the terminal device of the user 105. The user 105 who creates the digital assistant is sometimes referred to as an assistant creator, an assistant developer, and the like herein.

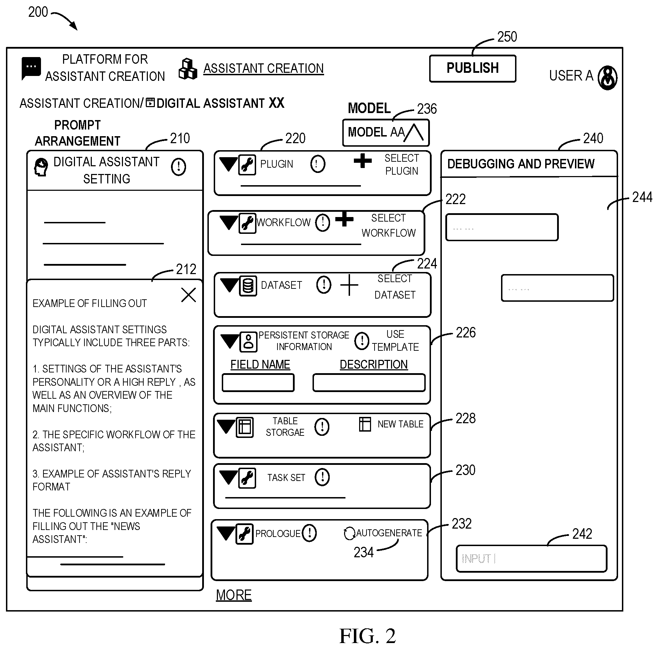

The user 105 may initiate a creation request to the assistant creation platform 110 as needed. In response to receiving the creation request, the assistant creation platform 110 presents a page for creating the digital assistant. On this page, the user 105 may configure the digital assistant to be created (assuming it is the digital assistant 120 shown in FIG. 1). Different from creating the digital assistant by writing code, in embodiments of the present disclosure, the page for creating the digital assistant is designed to include at least one configuration area for receiving configuration information of the digital assistant. Each configuration area is defined to receive a class of configuration information required for constructing the digital assistant. FIG. 2 illustrates an example of a page 200 for creating the digital assistant 120 according to some embodiments of the present disclosure.

Specifically, the page includes at least a first configuration area for receiving setting information input in a natural language. For example, a page 200 in FIG. 2 provides a configuration area 210, which includes an input box for receiving settings information input by a user in natural language.

The received settings information, as part of the configuration information of the digital assistant 120, will be used for generating a prompt input for the model. The response of the digital assistant 120 to the user is determined based on the output of the model. That is to say, the digital assistant 120 to be created will use the model to understand a user input and provide responses to the user based on the output of the model. The model used by the digital assistant 120 may run locally on the assistant creation platform 110 or on a remote server. In some embodiments, the model may be a machine learning model, a deep learning model, a learning model, neural networks, etc. In some embodiments, the model may be based on a language model (LM). The language model may have question answering capability by learning from a large amount of corpus. The model may also be based on other appropriate models.

During the creation process, a specific configuration area is provided for a user to provide settings information, and the configuration of settings information may be completed through natural language. Therefore, users may easily constrain the output of the model and configure diverse digital assistants.

In addition, the page also includes a second configuration area for receiving configurations for at least one processing component, and the processing component information indicates at least one processing component available for use by the digital assistant 120 when processing user requests. Each processing component may be understood as a tool that the digital assistant 120 can call when processing user requests, and each processing component may perform corresponding functions or services. The types of processing components may be very diverse, and may be selected, configured, or modified by the user 105 from existing processing components, or may allow the user 105 to customize one or more processing components. As shown in FIG. 2, the configuration area for receiving configurations for at least one processing component in page 200 includes configuration areas 220, 222, 224, 226, 228, 230, etc.

These processing components can be called by the model. After being configured (added), the descriptions corresponding to these components (including but not limited to functions, input/output, usage conditions, etc.) will be provided to the model in the form of a prompt, thereby indicating to the model that the corresponding capabilities of the components can be called. During the interaction with the user, the model can be used to analyze and judge whether to call the corresponding processing components (or tools) and capabilities. Examples of processing components include but are not limited to plugins, functions, APIs, etc.

By understanding user requests with the help of models and settings information and implementing user requests with the help of processing components, the digital assistant 120 will have a function for interacting with users and responding to user requests. The page used to create the digital assistant may be templated to provide various configuration areas for receiving configuration information of the digital assistant 120, and the user 105 may complete the customization of the digital assistant 120 without the need for complex configuration and coding.

In some embodiments, the page for creating the digital assistant may also include a third configuration area for receiving guidance information. In the example page 200 of FIG. 2, an area 232 for receiving guidance information is provided. The guidance information is used to be presented directly to the user 135 when the user 135 triggers interaction with the digital assistant 120. In some embodiments, the guidance information includes at least one of the following: description information for the digital assistant 120 and at least one recommended question for the digital assistant 120. The description information for the digital assistant 120 may enable the user 135 to understand the characteristics of the digital assistant 120, the functions that can be achieved, etc. The recommended question for the digital assistant 120 may inspire the user 135 to initiate interaction with the digital assistant 120, or directly select the recommended question to interact with the digital assistant 120.

In some embodiments, the guidance information may be automatically generated. An information generation control may be provided in the page, for example, the information generation control may be provided at a position associated with the third configuration area. In the example of FIG. 2, the information generation control 234 may be provided near the area 232. Because the description information of the digital assistant 120 and/or at least one recommended question to the digital assistant 120 may be derived from the settings information, in some embodiments, in the process of creating the digital assistant 120, and in response to detecting a triggering operation on the information generation control associated with the third configuration area, candidate guidance information is generated based at least on the setting information received in the first configuration area. The candidate guidance information is presented in the third configuration area. In this way, the user 105 may determine whether to use the candidate guide information, modify or replace the candidate guide information and the like as needed, to obtain the final desired guidance information.

As described above, the digital assistant 120 may understand user requests and determine responses to users with the help of models. In some embodiments, the model used by the digital assistant 120 may be default and does not require the creator to configure it. In some embodiments, during the creation of the digital assistant 120, the creator may be allowed to select the model to be used. A fourth configuration area may be provided on the page used to create the digital assistant for receiving a selection of the model. The selected model is called to determine the response to the user at the digital assistant 120. As shown in FIG. 2, page 200 also includes an area 236 for configuring the model, in which the user 105 may be allowed to select the model to be used.

The configurable processing components in the process of creating a digital assistant have been discussed above. In specific applications, the assistant creation platform may provide more, fewer, or different configurations of processing components as needed for the creator of the digital assistant to choose or configure.

In some embodiments, in order to allow the user 105 who creates the digital assistant to easily test the performance of the created digital assistant 120 during the creation process, a debugging area for the digital assistant, such as a debugging area 240 shown in FIG. 2, may also be provided on the page. The debugging area 240 includes an input area 242 for receiving a debugging request for the digital assistant 120, and a presentation area 244 for providing a debugging result for the debugging request (and providing the received debugging request). The debugging area 240 may be configured in the form of an interactive window, to simulate the interactive interface viewed by the interactive user of the digital assistant 120.

During the debugging process, the debugging results presented in the debugging area 240 may be determined based on the received debugging request and the current configuration information for the digital assistant 120 on the page 200. The user 105 may decide whether the actual operating results of the digital assistant 120 meet expectations based on the debugging results, and determine whether to continue modifying the configuration information, or publish the digital assistant. In some embodiments, for each debugging, in addition to providing the debugging results, the digital assistant 120 may also provide the underlying operating process for determining the debugging results, such as calling the model, the thinking process of the model, one or more plugins used, etc. This can allow the user 105 to more quickly determine whether the currently configured digital assistant meets expectations.

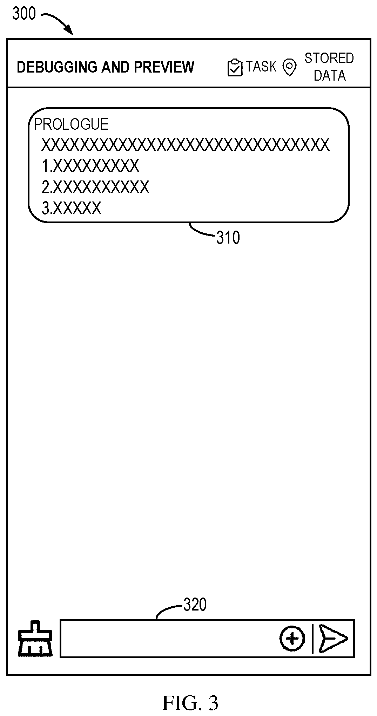

FIGS. 3 to 7 illustrate schematic diagrams of examples 300 to 700 of user interfaces according to some embodiments of the present disclosure. It should be understood that the interfaces shown are merely examples and various interface designs may actually exist. The various graphical elements in the interface may have different arrangements and visual representations, one or more of which can be omitted or replaced, and one or more other elements may also exist. Embodiments of the present disclosure are not limited in this aspect.

The user interfaces shown in examples 300 to 700 may be presented at the client of the assistant creation platform 110. For ease of discussion, examples 300 to 700 will be described with reference to the environment 100 of FIG. 1.

In the environment 100, the client of the assistant creation platform 110 may present a user interface for debugging the digital assistant in the client interface. After the digital assistant is created, the user who develops and debugs the digital assistant (i.e., the user 105) may debug the digital assistant by sending and/or receiving messages in the user interface. Such a user interface may be shown in example 300 in FIG. 3. As shown in FIG. 3, the assistant creation platform 110 may provide a user interface as shown in example 300. The identifier "Debugging and Preview" of the user interface is presented in example 300, which may at least indicate that the user interface shown in example 300 is a user interface for debugging the digital assistant. In response to the presentation of example 300, the assistant creation platform 110 may present a message 310 in example 300. The message 310 may be used to prompt how to debug, introduce the functions of the digital assistant, and so on.

In some embodiments of the present disclosure, the assistant creation platform 110 may receive a debugging request from a user based on natural language. In some embodiments, if the user interface is a user interface for debugging the digital assistant (e.g., example 300), the assistant creation platform 110 may receive the debugging request directly in the user interface. In some embodiments, the user interface may include multiple areas (e.g., an editing area, a debugging area, a configuration area, etc.). The assistant creation platform 110 may receive different requests for the digital assistant in different areas. In this case, the assistant creation platform 110 may receive the debugging request in the debugging area on the user interface. Example 300 may be viewed as a debugging area for such a user interface.

In terms of the manner for receiving the debugging request, as shown in FIG. 3, example 300 further includes an input box 320. For example, the assistant creation platform 110 may receive a user input debugging request via the input box 320. Alternatively, or in addition, in some embodiments, the assistant creation platform 110 may also receive the user input debugging request via a microphone, a physical operation control, etc., and the present disclosure does not limit the specific manner of receiving the request.

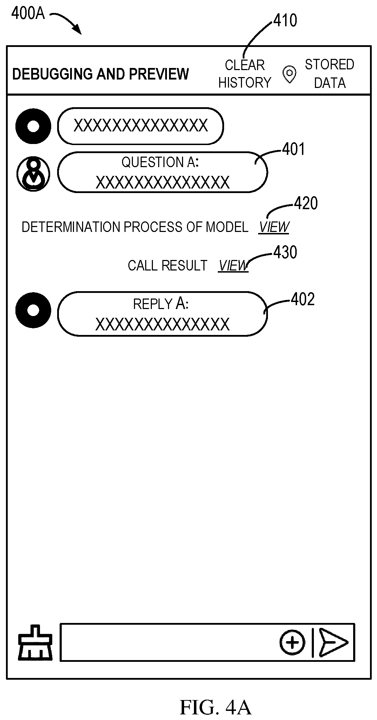

The received debugging request, for example, may be presented in the user interface in the form of a session message. In an example, as shown in FIG. 4A, the assistant creation platform 110 may present a received debugging request 401 in the form of a session message from the user in example 400A. The debugging request, for example, may include a test question to the digital assistant. For example, the debugging request can be a "question A" shown in FIG. 4A.

The assistant creation platform 110 may debug the digital assistant based on the received debugging request. In embodiments of the present disclosure, the assistant creation platform 110 may display on a user interface, one or more of a determination process of one or more function blocks of the digital assistant related to the debugging request, a call process of the one or more function blocks, or a call result of the one or more function blocks, etc. At least one of the determination process and the call process may be performed at least partially based on a model. The model can be a machine learning model, a deep learning model, a learning model, a neural network, etc. In some embodiments, such a model may be based on a language model (LM). The language model may have question answering capabilities by learning from a large amount of corpus. Certainly, the model may also be based on other appropriate models.

The assistant creation platform 110 may also display a debugging result for the debugging request on the user interface. In a case where the debugging request is a test question, the debugging result, for example, may include expected responses to the test question based on the current configuration information of the digital assistant. As shown in FIG. 4A, the assistant creation platform 110 may present the debugging result 402 for the debugging request 401 on the user interface.

It should be noted that the configuration information here is information configured by the developer of the digital assistant on the platform for digital assistant creation 110. Therefore, in some embodiments, only the developer of the digital assistant may debug the digital assistant by sending a debugging request on the assistant creation platform 110.

In some embodiments, at least one of a first control for activating displaying of the determination process, a second control for activating displaying of the call process, or a third control for activating displaying of the call result may be presented on the user interface. In response to receiving a predetermined operation (e.g., a click operation, a long press operation and the like) on at least one of the first control, the second control or the third control, the assistant creation platform 110 may display at least one of the determination process, the call process, or the call result corresponding to the at least one of the first control, the second control, or the third control.

Correspondingly, after at least one of the determination process, the call process, or the call result corresponding to the at least one of the first control, the second control or the third control is displayed on the user interface, at least one of a fourth control for ceasing displaying of the determination process, a fifth control for ceasing displaying of the calling process, or a sixth control for ceasing displaying of the calling result may be presented on the user interface. In response to receiving a predetermined operation on at least one of the fourth control, the fifth control, or the sixth control, the assistant creation platform 110 may cease displaying of at least one of the determination process, the call process, or the call result corresponding to the at least one of the fourth control, the fifth control, or the sixth control.

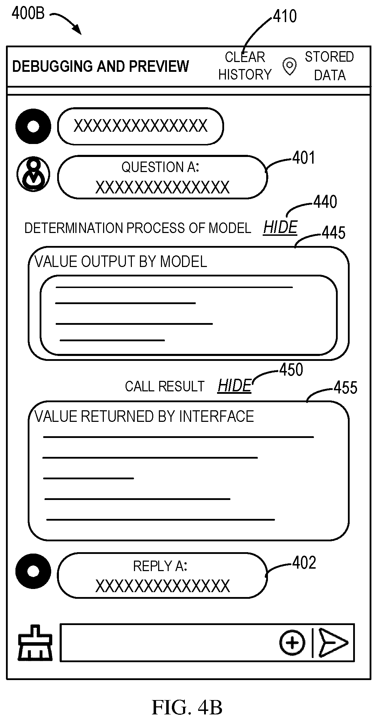

In an example, in a case where the first control and the third control are presented on the user interface, the assistant creation platform 110 may present the example 400A and example 400B as shown in FIGS. 4A and 4B. As shown in FIG. 4A, in response to receiving the debugging request 401, the assistant creation platform 110 presents the control 420 for activating display of the determination process (i.e., the first control), the control 430 for activating display of the call result (i.e., the third control), and the debugging result 402 on the user interface as shown in example 400A.

In response to receiving a predetermined operation on the control 420, the assistant creation platform 110 may present a user interface as shown in example 400B. The assistant creation platform 110 may present a determination process 445 corresponding to the control 420 in example 400B. In a case where the determination process is performed with a model and the determination process is completed, the assistant creation platform 110 may present the determination process 445, for example, by presenting values output by a model.

Similarly, in response to receiving a predetermined operation on the control 430, the assistant creation platform 110 may present a user interface as shown in example 400B. The assistant creation platform 110 may present a call result 455 corresponding to the control 430 in example 400B. The assistant creation platform 110 may present the call result 455, for example, by presenting values returned by an interface.

As shown in FIG. 4B, the example 400B also presents a control 440 (i.e., the fourth control) for ceasing displaying of the determination process and a control 450 (i.e., the sixth control) for ceasing displaying of the call result. It can be understood that in response to detecting predetermined operations on the control 440 and the control 450, the assistant creation platform 110 will switch to the user interface including the control 420 and the control 430 shown in the presentation example 400A.

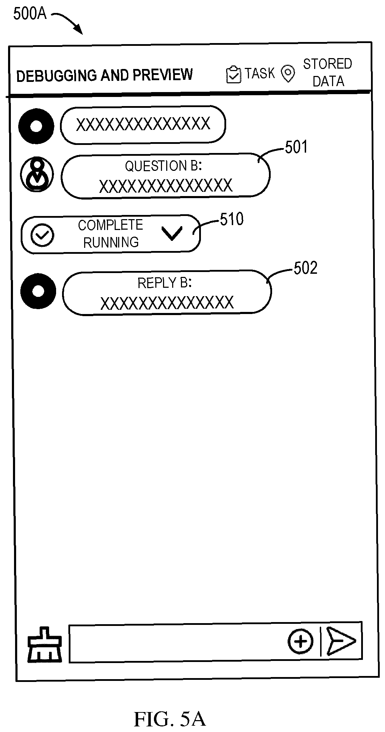

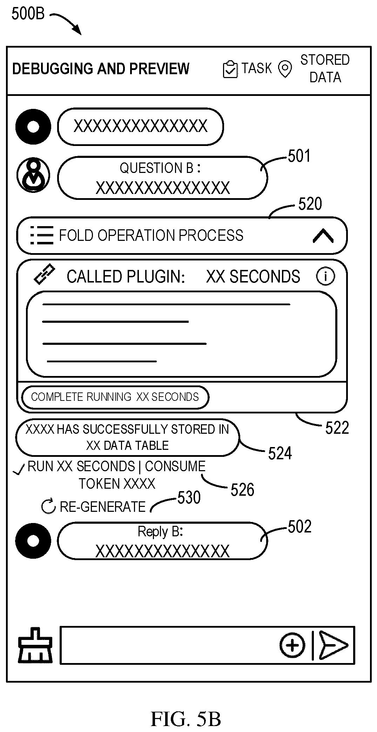

In an example, where the second control is presented on the user interface, the assistant creation platform 110 may present an example 500A and an example 500B as shown in FIGS. 5A and 5B. As shown in FIG. 5A, in response to receiving the debugging request 501, the assistant creation platform 110 presents the control 510 (i.e., the second control) for activating display of the call process and the debugging result 502 on the user interface shown in example 500A.

In response to receiving a predetermined operation on the control 510, the assistant creation platform 110 may present a user interface as shown in the example 500B. The assistant creation platform 110 may present a call process 522 corresponding to the control 510 in the example 500B. In an example, the assistant creation platform 110 may present a call process for call function block (e.g., a plug-in) of a digital assistant in the example 500B. In a case where the call process is being executed, the assistant creation platform 110 may present a call progress for the function block, for example, in the call process 522. The call progress may be presented in the call process 522, for example, in the form of a percentage number (e.g., XX%). In a case where the call process is completed, the assistant creation platform 110 may present, for example, the time taken to execute the call process (e.g., XX seconds, completed run XX seconds, etc.) during the call process.

In some embodiments, the assistant creation platform 110 may also store data generated during the execution of the call, for example, the assistant creation platform 110 may present the generated data and the location where the data is stored in association with the call process 522. For example, the assistant creation platform 110 may present a message 524 in association with the call process 522. The message 524 may indicate the data generated during the call and the location where the data is stored. In some embodiments, the assistant creation platform 110 may also present the total time spent executing the call process and storing the data, as well as the resources consumed (such as tokens). For example, the assistant creation platform 110 may also present prompt information 526. The prompt information 526 may indicate the total time spent executing the call process and storing the data (such as "running XX seconds") and the resources consumed (such as "consuming tokens XXXX"). It can be understood that the total time spent here should be greater than or equal to the time spent executing the call process in the call process 522.

As shown in FIG. 5B, a control 520 (i.e., a fifth control) for ceasing displaying of the call process is also presented in the example 500B. It can be understood that in response to detecting a predetermined operation on the control 520, the assistant creation platform 110 will switch to the user interface including the control 510 shown in the example 500A.

In some embodiments, a control for clearing a historical debugging record is also presented on the user interface. In response to receiving a predetermined operation on the control for clearing the historical debugging record, the assistant creation platform 110 may clear the historical debugging record displayed on the user interface. Referring back to FIGS. 4A and 4B, as shown in FIGS. 4A and 4B, a control 410 for clearing the historical debugging record may also be presented on the user interface. For example, in response to receiving a click operation on the control 410, the assistant creation platform 110 may clear the historical debugging record displayed on the user interface.

In some embodiments, if an update request for a configuration of at least one function block of the digital assistant related to the debugging request is received, the assistant creation platform 110 may update the configuration of at least one functional block. A control for activating the re-debugging is also presented on the user interface. In response to receiving a predetermined operation on the control for activating the re-debugging, the assistant creation platform 110 may generate an updated debugging result for the debugging request, based on the updated configuration of the at least one function block. Continuing with reference to FIG. 5B, as shown in FIG. 5B, a control 530 for activating re-debugging may also be presented on the user interface. The control 530 for activating re-debugging may be presented, for example, in association with the debugging result 502 in the example 500B. For example, in response to receiving a click operation on the control 430, the assistant creation platform 110 may generate an updated debugging result for the debugging request, e.g., based on the updated configuration of the at least one function block.

In addition to the test questions to the digital assistant mentioned above, in some embodiments, the debugging request may also include an access test request for stored data related to the user. A control for displaying stored data may be presented on the user interface. If a predetermined operation on the control for displaying the stored data is received, the assistant creation platform 110 may present a display card of the stored data on the user interface. The stored data here is not visible to other users except the user. That is, the stored data of user 105 may only be viewed by user 105 and may not be viewed by other users.

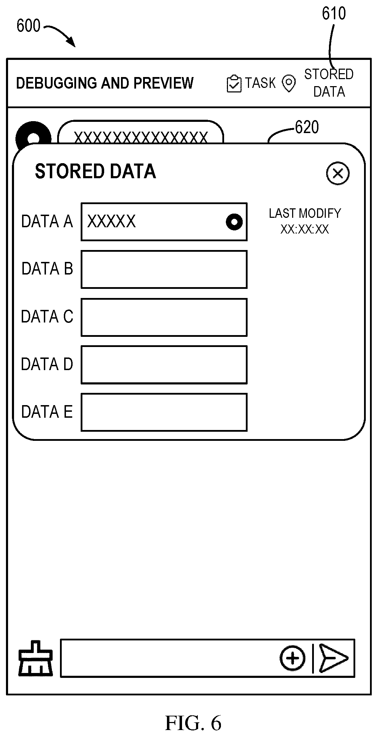

In an example, as shown in FIG. 6, the assistant creation platform 110 may present an example 600. The user interface shown in the example 600 presents a control 610 for displaying the stored data. In response to detecting a predetermined operation on the control 610, the assistant creation platform 110 may present a display card 620 of the stored data in the example 600. At least one stored data may be displayed in the display card 620. In some embodiments, the display card 620 may also present the time when the user last modified the stored data (e.g., information "Recently modified XX: XX: XX" may be presented).

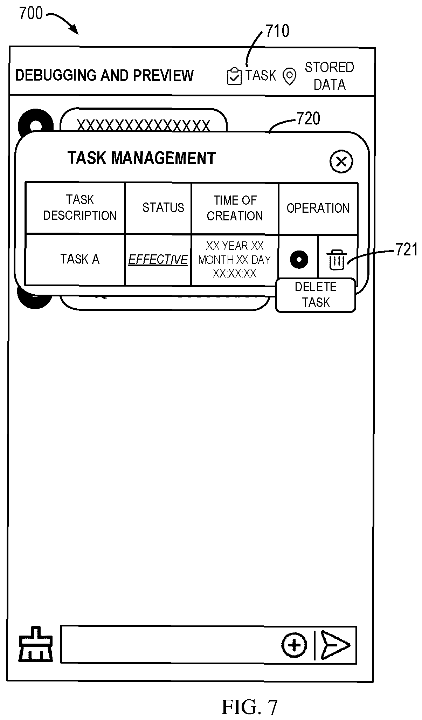

In some embodiments, the debugging request may also include an access test request for a set task by the user. A control for displaying the set task may be presented on the user interface. If a predetermined operation on the control for displaying the set task is received, the assistant creation platform 110 may present a display card of the set task on the user interface. Similarly, the set task may be visible only to the user or other users who have been set by the user to have viewing rights. In an example, as shown in FIG. 7, the assistant creation platform 110 may present an example 700. A control 710 for displaying the set task is presented on the user interface shown in example 700. In response to detecting a predetermined operation on the control 710, the assistant creation platform 110 may present a display card 720 of the set task in example 700. At least one set task may be displayed in display card 720. In some embodiments, the display card 720 may present a task description, status, creation time, and executable operations of the set task. In some embodiments, the display card 720 may also present an operation control at executable operations of the created task. In response to detecting a hover operation on the operation control 721, the assistant creation platform 110 may present descriptive information (e.g., a delete task) of the operation control in association with the operation control 721. For example, the descriptive information may be used to describe functions of the operation control 721.

In summary, according to embodiments of the present disclosure, by providing a modular and simple input digital assistant debugging solution, users may easily and quickly debug digital assistants with different capabilities without requiring coding skills.

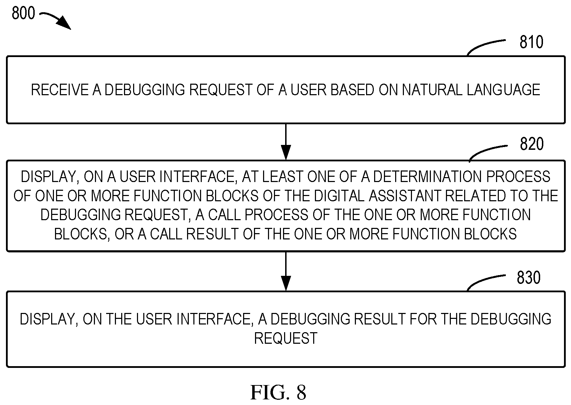

FIG. 8 illustrates a flow chart of a process 800 for debugging a digital assistant in accordance with some embodiments of the disclosure. The process 800 may be implemented at the assistant creation platform 110. In the following, the process 800 may be described with reference to FIG. 1.

At block 810, the assistant creation platform 110 receives a debugging request of a user based on natural language.

At block 820, the assistant creation platform 110 displays, on a user interface, at least one of a determination process of one or more function blocks of the digital assistant related to the debugging request, a call process of the one or more function blocks, or a call result of the one or more function blocks.

At block 830, the assistant creation platform 110 displays, on the user interface, a debugging result for the debugging request.

In some embodiments, the debugging request comprises a test question to the digital assistant, and the debugging result comprises an expected response to the test question determined based on current configuration information of the digital assistant.

In some embodiments, at least one of the determination process or the call process is performed at least in part based on a model.

In some embodiments, displaying at least one of the determination process, the call process or the call result comprises: presenting, on the user interface, at least one of a first control for activating displaying of the determination process, a second control for activating display of the call process, or a third control for activating display of the call result; and in response to receiving a predetermined operation on at least one of the first control, the second control or the third control, displaying at least one of the determination process, the call process, or the call result corresponding to the at least one of the first control, the second control, or the third control.

In some embodiments, the process 800 further includes: presenting, on the user interface, at least one of a fourth control for ceasing display of the determination process, a fifth control for ceasing display of the calling process, or a sixth control for ceasing display of the calling result; and in response to receiving a predetermined operation on at least one of the fourth control, the fifth control, or the sixth control, ceasing display of at least one of the determination process, the call process, or the call result corresponding to the at least one of the fourth control, the fifth control, or the sixth control.

In some embodiments, the process 800 further includes: in response to receiving an update request for a configuration of at least one function block of the digital assistant related to the debugging request, updating the configuration of the at least one function block; and in response to receiving a predetermined operation on a control for activating re-debugging, generating an updated debugging result for the debugging request based on the updated configuration of the at least one function block.

In some embodiments, the process 800 further includes: presenting, on the user interface, a control for clearing a historical debugging record; and in response to receiving a predetermined operation on the control for clearing the historical debugging record, clearing the historical debugging record displayed on the user interface.

In some embodiments, the debugging request comprises an access test request for stored data related to the user, and the process 800 further includes: presenting, on the user interface, a control for displaying the stored data; and in response to receiving a predetermined operation on the control for displaying the stored data, presenting a display card of the stored data on the user interface.

In some embodiments, the stored data is invisible to other users different from the user.

In some embodiments, the debugging request comprises an access test request for a task set by the user, and the process 800 further includes: presenting, on the user interface, a control for displaying the set task; and in response to receiving a predetermined operation on the control for displaying the set task, presenting a display card of the set task on the user interface.

In some embodiments, receiving the debugging request comprises: receiving the debugging request in a debugging area on the user interface.

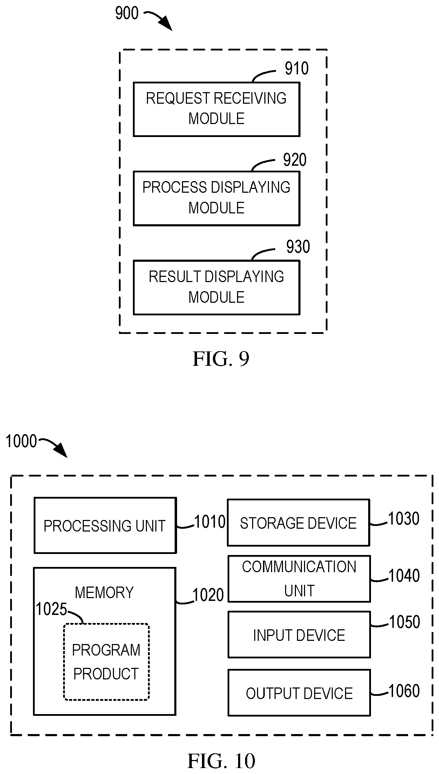

FIG. 9 shows a schematic structural block diagram of an apparatus 900 for debugging a digital assistant in accordance with some embodiments of the disclosure. The apparatus 900 may be implemented or included, for example, in the assistant creation platform 110. Various modules/components in the apparatus 900 may be implemented by hardware, software, firmware, or any combination of them.

As illustrated, the apparatus 900 includes a request receiving module 910 configured to receive a debugging request of a user based on natural language. The apparatus 900 further includes a process displaying module 920 configured to display, on a user interface, at least one of a determination process of one or more function blocks of the digital assistant related to the debugging request, a call process of the one or more function blocks, or a call result of the one or more function blocks. The apparatus 900 further includes a result displaying module 930 configured to display, on the user interface, a debugging result for the debugging request.

In some embodiments, the debugging request comprises a test question to the digital assistant, and the debugging result comprises an expected response to the test question determined based on current configuration information of the digital assistant.

In some embodiments, at least one of the determination process or the call process is performed at least in part based on a model.

In some embodiments, the process displaying module 920 is configured to: present, on the user interface, at least one of a first control for activating displaying of the determination process, a second control for activating displaying of the call process, or a third control for activating displaying of the call result; and in response to receiving a predetermined operation on at least one of the first control, the second control, or the third control, display at least one of the determination process, the call process, or the call result corresponding to the at least one of the first control, the second control, or the third control.

In some embodiments, the apparatus 900 further comprising: a first control presenting module configured to present, on the user interface, at least one of a fourth control for ceasing display of the determination process, a fifth control for ceasing display of the calling process, or a sixth control for ceasing display of the calling result; and a first ceasing module configured to, in response to receiving a predetermined operation on at least one of the fourth control, the fifth control or the sixth control, cease displaying of at least one of the determination process, the call process, or the call result corresponding to the at least one of the fourth control, the fifth control, or the sixth control.

In some embodiments, the apparatus 900 further includes: a configuration updating module configured to, in response to receiving an update request for a configuration of at least one function block of the digital assistant related to the debugging request, update the configuration of the at least one function block; and a result updating module configured to, in response to receiving a predetermined operation on a control for activating re-debugging, generate an updated debugging result for the debugging request based on the updated configuration of the at least one function block.

In some embodiments, the apparatus 900 further includes: a second control presenting module configured to present, on the user interface, a control for clearing a historical debugging record; and a record clearing module configured to, in response to receiving a predetermined operation on the control for clearing the historical debugging record, clear the historical debugging record displayed on the user interface.

In some embodiments, the debugging request comprises an access test request for stored data related to the user, and the apparatus 900 further includes: a third control presenting module configured to present, on the user interface, a control for displaying the stored data; and a first card displaying module configured to, in response to receiving a predetermined operation on the control for displaying the stored data, present a display card of the stored data on the user interface.

In some embodiments, the stored data is invisible to users other than the user.

In some embodiments, the debugging request comprises an access test request for a task set by the user, and the apparatus 900 further includes: a fourth control presenting module configured to present, on the user interface, a control for displaying the set task; and a second card displaying module configured to, in response to receiving a predetermined operation on the control for displaying the set task, presenting a display card of the set task on the user interface.

In some embodiments, the request receiving module 910 is configured to receive the debugging request in a debugging area on the user interface.

FIG. 10 illustrates a block diagram of an electronic device 1000 in which one or more embodiments of the present disclosure may be implemented. It should be understood that the electronic device 1000 shown in FIG. 10 is merely an example and should not constitute any limitation of the functionality and scope of the embodiments described herein. The electronic device 1000 shown in FIG. 10 may be included in or implemented as the assistant creation platform 110 in FIG. 1 or the apparatus 900 in FIG. 9.

As shown in FIG. 10, the electronic device 1000 is in the form of a general purpose electronic device. The components of the electronic device 1000 may include, but are not limited to, one or more processors or processing units 1010, a memory 1020, a storage device 1030, one or more communication units 1040, one or more input devices 1050, and one or more output devices 1060. The processing units 1010 may be an actual or virtual processor and is capable of performing various processes based on the programs stored in memory 1020. In a multiprocessor system, multiple processing units execute computer-executable instructions in parallel to enhance the parallel processing capability of the electronic device 1000.

The electronic device 1000 typically includes multiple computer storage media. Such media can be any available media that is accessible to the electronic device 1000, including but not limited to volatile and non-volatile media, removable and non-removable media. The memory 1020 may be a volatile memory (such as a register, cache, a random access memory (RAM)), a non-volatile memory (such as a read-only memory (ROM), electrically erasable programmable read-only memory (EEPROM), a flash memory), or any combination thereof. The storage device 1030 may be removable or non-removable media and may include a machine-readable medium such as a flash drive, a disk, or any other medium that can be used to store information and/or data and can be accessed within electronic device 1000.

The electronic device 1000 may further include additional removable/non-removable, volatile/non-volatile storage media. Although not shown in FIG. 10, a disk drive for reading from or writing to a removable, non-volatile disk (e.g., a "floppy disk") and an optical disk drive for reading from or writing to a removable, non-volatile optical disk may be provided. In these cases, each drive may be connected to a bus (not shown) by one or more data medium interfaces. The memory 1020 may include a computer program product 1025, which has one or more program modules configured to execute various methods or acts of various implementations of the present disclosure.

The communication unit 1040 communicates with a further electronic device through the communication media. In addition, functionality of components in the electronic device 1000 may be implemented by a single computing cluster or multiple computing machines, which can communicate through a communication connection. Therefore, the electronic device 1000 may be operated in a networking environment using a logical connection with one or more other servers, a network personal computer (PC), or another network node.

The input device 1050 may be one or more input devices, such as a mouse, a keyboard, a trackball, etc. The output device 1060 may be one or more output devices, such as a display, a speaker, a printer, etc. The electronic device 1000 may also communicate with one or more external devices (not shown) through the communication unit 1040 as required. The external device, such as a storage device, a display device, etc., communicate with one or more devices that enable users to interact with the electronic device 1000, or communicate with any device (for example, a network card, a modem, etc.) that makes the electronic device 1000 communicate with one or more other computing devices. Such communication may be executed via an input/output (I/O) interface (not shown).

According to the example implementations of the present disclosure, a computer-readable storage medium is provided, on which a computer-executable instruction or computer program is stored, wherein the computer-executable instructions is executed by the processor to implement the method described above. According to the example implementations of the present disclosure, a computer program product is also provided. The computer program product is physically stored on a non-transitory computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers, or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be executed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes can also be executed in a reverse order, depending on the functionality involved. It should also be noted that each block in the block diagram and/or the flowchart, and combinations of blocks in the block diagram and/or the flowchart, may be implemented by a dedicated hardware-based system that executes the specified functions or acts, or by the combination of dedicated hardware and computer instructions.

Each implementation of the present disclosure has been described above. The above description is an example, not exhaustive, and is not limited to the disclosed implementations. Without departing from the scope and spirit of the described implementations, many modifications and changes are obvious to those of ordinary skill in the art. The selection of terms used in the present disclosure aims to best explain the principles, practical application or improvement of technology in the market of each implementation, or to enable others of ordinary skill in the art to understand the various implementations disclosed herein.

## Claims

1. A method of debugging a digital assistant, comprising:
receiving a debugging request of a user based on natural language;
displaying, on a user interface, at least one of: a determination process of one or more function blocks of the digital assistant related to the debugging request, a call process of the one or more function blocks, or a call result of the one or more function blocks; and
displaying, on the user interface, a debugging result for the debugging request.

2. The method of claim 1, wherein the debugging request comprises a test question to the digital assistant, and the debugging result comprises an expected response to the test question determined based on current configuration information of the digital assistant.

3. The method of claim 2, wherein at least one of the determination process or the call process is performed at least in part based on a model.

4. The method of claim 1, wherein displaying at least one of the determination process, the call process or the call result comprises:
presenting, on the user interface, at least one of a first control for activating a display of the determination process, a second control for activating a display of the call process, or a third control for activating a display of the call result; and
in response to receiving a predetermined operation on at least one of the first control, the second control, or the third control, displaying at least one of the determination process, the call process, or the call result corresponding to the at least one of the first control, the second control, or the third control.

5. The method of claim 4, further comprising:
presenting, on the user interface, at least one of a fourth control for ceasing display of the determination process, a fifth control for ceasing display of the calling process, or a sixth control for ceasing display of the calling result; and
in response to receiving a predetermined operation on at least one of the fourth control, the fifth control, or the sixth control, ceasing display of at least one of the determination process, the call process, or the call result corresponding to the at least one of the fourth control, the fifth control, or the sixth control.

6. The method of claim 1, further comprising:
in response to receiving an update request for a configuration of at least one function block of the digital assistant related to the debugging request, updating the configuration of the at least one function block; and
in response to receiving a predetermined operation on a control for activating re-debugging, generating an updated debugging result for the debugging request based on the updated configuration of the at least one function block.

7. The method of claim 1, further comprising:
presenting, on the user interface, a control for clearing a historical debugging record; and
in response to receiving a predetermined operation on the control for clearing the historical debugging record, clearing the historical debugging record displayed on the user interface.

8. The method of claim 1, wherein the debugging request comprises an access test request for stored data related to the user, and the method further comprises:
presenting, on the user interface, a control for displaying the stored data; and
in response to receiving a predetermined operation on the control for displaying the stored data, presenting a display card of the stored data on the user interface.

9. The method of claim 8, wherein the stored data is invisible to other users different from the user.

10. The method of claim 1, wherein the debugging request comprises an access test request for a task set by the user, and the method further comprises:
presenting, on the user interface, a control for displaying the set task; and
in response to receiving a predetermined operation on the control for displaying the set task, presenting a display card of the set task on the user interface.

11. The method of claim 1, wherein receiving the debugging request comprises:
receiving the debugging request in a debugging area on the user interface.

12. An apparatus for debugging a digital assistant, comprising:
a request receiving module configured to receive a debugging request of a user based on natural language;
a process displaying module configured to display, on a user interface, at least one of a determination process of one or more function blocks of the digital assistant related to the debugging request, a call process of the one or more function blocks, or a call result of the one or more function blocks; and
a result displaying module configured to display, on the user interface, a debugging result for the debugging request.

13. An electronic device comprising:
at least one processing unit; and
at least one memory, the at least one memory being coupled to the at least one processing unit and storing an instruction for execution by the at least one processing unit, the instruction, when executed by the at least one processing unit, causing the electronic device to perform the method of any of claims 1 to 11.

14. A computer readable storage medium storing a computer program thereon, the computer program being executable by a processor to implement the method of any of claims 1 to 11.
